# FASCICULE DE BREVET EUROPEEN

(11) **EP 2 081 009 B1**
(45) Date de publication et mention de la délivrance du brevet: **05.01.2011**
(21) Numéro de dépôt: 09150884.6
(22) Date de dépôt: 19.01.2009
(51) Int. Cl.: G01N 17/00, G01N 17/04

(54) **Dispositif de détection de corrosion**
Vorrichtung zur Korrosionserkennung
Apparatus for corrosion detection

(30) Priorité: 17.01.2008 EP 08100573
(43) Date de publication de la demande: 22.07.2009
(73) Titulaire: Sercal Belgium, 2170 Merksem (BE)
(72) Inventeur: Willemen, Karl, B-2170, MERKSEM (BE); Carpentiers, Philippe, B-7800, ATH (BE)
(74) Mandataire: Van Malderen, Joëlle

(56) Documents cités:
- EP-A- 1 411 580
- US-A- 3 621 810
- US-A- 3 846 795
- US-A1- 2004 055 391

## Description

### Objet de l'invention

La présente invention concerne un dispositif et un procédé de détection de la présence de corrosion dans une structure (principalement) métallique, comme par exemple un circuit, et due à la présence d'un fluide.

### Etat de la technique

Un certain nombre de structures métalliques se présentant sous la forme de circuits fermés à l'intérieur desquels circule un fluide, liquide ou gazeux, subissent des dégradations dues à la corrosion. En particulier, c'est le cas d'installations hydrauliques domestiques telles que des installations de chauffage central, des installations de climatisation individuelles ou collectives, mais également d'installations industrielles telles que par exemple des installations chimiques.

Ce phénomène de corrosion est essentiellement dû à la présence, désirée ou non, d'oxygène dans le fluide qui circule ou est présent dans le circuit. Différentes causes peuvent rendre l'action de l'oxygène possible au cours de l'utilisation de ces installations, telles que notamment des fuites d'étanchéité ou l'utilisation d'un fluide plus ou moins corrosif. Ces causes varient au cours du temps en fonction à la fois de la nature même de ces installations (paramètres internes tels que sa composition et sa vétusté), et au niveau de leur conditions d'utilisation (paramètres externes tels que l'environnement, la température, la pression, la nature du fluide y circulant).

En général, l'utilisateur lui-même connaît les zones de faiblesse ou celles susceptibles de le devenir et cherchera à privilégier les contrôles de corrosion à ce niveau.

De nombreuses méthodes ont été mises au point pour permettre de détecter la présence de corrosion au niveau de structures métalliques, et éventuellement de la quantifier. Il peut s'agir tant de méthodes invasives que de méthodes non invasives.

A titre d'exemple, on peut ainsi citer des méthodes de type électrochimique qui par la mesure du potentiel d'électrodes, de courant de couplage ou de résistance de polarisation permettent de quantifier la corrosion que subit une structure métallique.

Les méthodes de mesure de la présence de corrosion peuvent également être des méthodes physiques qui permettent de mesurer la résistance électrique d'une petite section de métal ou encore des méthodes de mesure indirecte telles que la mesure de la concentration d'oxygène, du pH ou de la concentration en métal dissout.

Le document US-3846795 décrit un système de détection de corrosion fissurante sous tension (en anglais: "stress corrosion cracking"), qui peut se produire sur les aciers spéciaux, comme par exemple les aciers inoxydables qui sont soumis à des contraintes mécaniques dans un milieu corrosif. Le détecteur surveille une éprouvette mise sous tension dans le milieu corrosif et détecte la rupture par fissuration de celle-ci. Ce type de système n'est pas apte à mesurer la corrosion généralisée.

Le document US-6843135 décrit un détecteur de corrosion généralisée, qui surveille un ou plusieurs coupons calibrés sans y avoir un accès direct. Les coupons sont conçus de telle façon qu'ils se rompent lorsque la corrosion en a diminué sensiblement la section. Les coupons sont maintenus sous tension par un ressort et reliés mécaniquement à un aimant permanent qui se déplace lors de la rupture des coupons et permet ainsi la transmission d'un signal à l'extérieur du milieu corrosif.

Dans ce dernier détecteur, tout un système mécanique comprenant non seulement le coupon, mais également l'aimant et le ressort, se trouve dans le milieu corrosif. Tous ces composants immergés pourraient être perturbés par le milieu corrosif, ce qui pourrait donner lieu à de fausses détections. En outre, des variations et imperfections dans le matériel du coupon, la présence du système mécanique qui pourrait influencer la vitesse de corrosion dudit coupon (le coupon est maintenu sous tension par un ressort) et la perturbation de la sonde par le milieu corrosif (par exemple accumulation de particules métalliques ou d'oxydes magnétiques sur l'aimant permanent) influencent de manière négative la précision de détection d'un seuil de corrosion prédéterminé.

### Buts de l'invention

La présente invention vise à proposer un dispositif et un procédé de détection et/ou de mesure de la corrosion due principalement à l'influence de la présence d'oxygène au sein de structures principalement (essentiellement) métalliques qui ne présentent pas les inconvénients de l'état de la technique et de préférence qui soient à la fois très simples et peu coûteux.

La présente invention vise en particulier à proposer un dispositif et un procédé qui peuvent être utilisés dans n'importe quel type d'installations se présentant de préférence sous forme de circuit (fermé ou ouvert) dans lequel est présent un fluide, gaz ou liquide, éventuellement potentiellement corrosif. L'installation peut également se présenter sous forme d'un réservoir.

### Principaux éléments caractéristiques de la présente invention

La présente invention se rapporte à un dispositif de détection de la présence et/ou de mesure de la corrosion au niveau d'au moins une structure principalement métallique se présentant de préférence sous la forme d'un circuit (fermé ou ouvert) à l'intérieur de laquelle structure est présent un fluide, ledit dispositif comprenant :
- un corps principal;
- une sonde de même nature métallique que la structure métallique, située à proximité dudit corps principal, et destinée à être immergée dans le fluide;
- un capteur de proximité situé dans le corps principal, ledit capteur de proximité étant conçu pour interagir avec ladite sonde tant que celle-ci n'atteint pas une quantité critique correspondant à un seuil de corrosion prédéterminé.

Le corps principal est de préférence destiné à être disposé à la périphérie de la structure métallique (le circuit). Le corps principal peut être conçu pour être disposé dans la tuyauterie et/ou à l'intérieur de la structure métallique (le circuit).

Le corps principal comprend une paroi étanche au fluide. La paroi est de préférence de nature électriquement isolante. La paroi sépare une face interne au corps principal d'une face externe à celui-ci.

La sonde se réfère à un échantillon témoin.

La sonde est située du côté de la face externe et prend la forme d'une pastille métallique. Cette pastille est destinée à être corrodée. Du fait de la corrosion elle diminuera en masse.

Le capteur de proximité est situé du côté de la face interne au corps principal. Le capteur de proximité et la sonde sont donc séparés par la paroi. Le capteur de proximité est conçu pour interagir avec la pastille métallique tant que la masse de celle-ci ne diminue pas en dessous d'une quantité prédéterminée. Cette quantité prédéterminée correspond de préférence à un seuil de corrosion critique.

Ledit corps principal est donc délimité par la paroi qui définit l'intérieur et l'extérieur dudit corps principal. La sonde et le capteur de proximité sont situés de part et d'autre de la paroi, respectivement à l'extérieur et à l'intérieur dudit corps principal. L'interaction sonde/capteur de proximité se fait à travers ladite paroi.

La sonde est donc constituée par la pastille. Celle-ci est destinée à être immergée dans le fluide. La paroi est aussi destinée à être immergée dans le fluide au moins partiellement. Tous les autres composants du dispositif sont protégés du fluide corrosif par la paroi étanche. La sonde (la pastille) donc ne comprend pas d'élément conçu pour se déplacer ou pour entrer en mouvement (pas de partie mécanique) et qui est destiné à être immergé.

Par conséquent, le dispositif de l'invention est à la fois plus fiable et plus facile à être produit que les dispositifs de l'art antérieur.

En outre, un avantage du dispositif de l'invention est que le capteur de proximité interagit directement avec la pastille métallique. La pastille est surveillée directement par le capteur. Le capteur de proximité en fait est conçu pour détecter la perte de masse de la pastille (la sonde).

Dans le dispositif de l'invention, seulement la pastille métallique (la sonde) et la paroi sont destinées à être en contact avec le fluide.

Selon la présente invention, il s'agit donc de mesurer des phénomènes de corrosion de manière à pouvoir intervenir rapidement si une telle observation était faite. Les dispositifs de l'invention sont conçus pour la détection de la corrosion généralisée, mais peuvent également être conçus pour mesurer la corrosion localisée sous dépôt.

On pourrait surveiller la corrosion sous dépôt en ajoutant un écran devant la pastille.

De préférence, le dispositif comprend des moyens (un dispositif) de signalisation et/ou d'alarme. Le capteur de proximité est couplé à ces moyens de signalisation et/ou d'alarme.

De préférence, le capteur de proximité est conçu pour activer les moyens de signalisation et/ou d'alarme en l'absence d'interaction capteur de proximité/sonde.

De préférence, le dispositif de l'invention comprend des moyens pour transmettre l'état de l'interaction capteur de proximité/sonde à l'extérieur du dispositif. Ces moyens peuvent être lesdits moyens de signalisation et/ou d'alarme. La période de temps entre deux transmissions successives est de préférence au moins 12 heures, au moins 24 heures, de préférence au moins 48 heures et de préférence au moins 100 heures. Ceci permet de limiter la consommation d'énergie du dispositif et est surtout avantageux quand le dispositif doit être opéré par de sources d'énergie portables (batteries, énergie solaire, etc.) et/ou se trouve dans un endroit éloigné d'une connexion au réseau d'électricité.

De préférence, le capteur de proximité est conçu pour effectuer deux mesures (détections) successives avec une période de temps entre celles-ci d'au moins 12 heures, au moins 24 heures, de préférence au moins 48 heures et de préférence au moins 100 heures.

Avantageusement, selon l'invention, le seuil de corrosion correspond à une variation en poids (masse) de la sonde (pastille métallique) d'au moins 5%, de préférence d'au moins 10%, et de préférence d'au moins, 20%, 30%, 40%, 50%.

De préférence, la pastille métallique est en contact avec la paroi. De préférence, la sonde (la pastille) est directement fixée ou solidaire de la paroi.

De préférence, la paroi est électriquement isolante.

De préférence, la paroi est formée d'une matière non magnétique.

De préférence, la paroi est non métallique. La paroi est préférablement formée d'une matière polymérique (plastique). De façon particulièrement avantageuse, la paroi du corps principal du dispositif selon l'invention comprend au moins un composant sélectionné parmi le groupe constitué par les céramiques et les polymères non conducteurs.

Les dispositifs de l'invention, par leur construction particulière, permettent d'avoir des dimensions très restreintes. Les dispositifs de l'invention sont préférablement équipés d'un filetage de ½ pouce, de ¾ pouce ou de 1 pouce. Les dispositifs de l'invention sont alternativement préférablement équipés d'un filetage de diamètre entre environ 10 mm et environ 50 mm, de préférence entre environ 15 mm et environ 40 mm. Ceci permet de les monter sur le circuit parmi d'un raccord de type T. La sonde et la paroi peuvent donc avoir une dimension qui ne dépasse pas les dimensions indiqués ci-dessus.

De préférence, la structure métallique est magnétique.

Selon une première forme d'exécution de l'invention, ledit capteur de proximité est de type mécanique. De préférence, le capteur de proximité comprend au moins un aimant relié à un ressort. Le ressort et/ou l'aimant peut être raccordé à un indicateur ou à des moyens de signalisation. L'aimant est de préférence un aimant permanent. Cette forme d'exécution se base sur la perte de masse de la pastille qui au-delà du seuil prédéterminé provoque le retrait du ressort et de l'aimant.

De préférence, le ressort est taré pour présenter une force de rappel inférieure à la force exercée par l'aimant agissant sur la sonde (pastille) tant que ladite sonde n'atteint pas une quantité critique (de sa masse) correspondant à un seuil de corrosion prédéterminé.

De préférence, la force de rappel exercée par le ressort correspond à un seuil en dessous duquel la sonde n'interagit plus avec l'aimant.

Selon une deuxième forme d'exécution, le capteur de proximité est de type magnétique et comprend un aimant, préférablement un aimant permanent, et un contact (interrupteur) magnétique ou un capteur de champ à effet Hall. La sonde constitue un entrefer ou un chemin magnétique entre l'aimant et le contact magnétique ou le capteur de champ à effet Hall. Cette forme d'exécution se base sur la diminution de la conduction magnétique entre l'aimant et l'interrupteur magnétique due à la diminution de masse de la sonde. Le capteur de champ à effet Hall nécessite une sonde (pastille) qui est magnétique.

Selon une troisième forme d'exécution, le capteur de proximité est de type électronique. Ce capteur de proximité est conçu pour mesurer la diminution de masse de la sonde (pastille). Dans cette forme d'exécution, avantageusement, aucune pièce n'entre en mouvement.

Le capteur de proximité est de préférence de type inductif.

Le capteur de proximité peut ainsi comprendre une bobine inductrice.

En outre, selon l'invention, le capteur de proximité peut être couplé localement ou à distance au dispositif de signalisation et/ou d'alarme.

Les moyens de signalisation et/ou d'alarme sont de type mécanique, électrique, électronique, ou pneumatique.

Avantageusement, dans le dispositif selon l'invention, l'épaisseur de la sonde (la pastille) est choisie de manière à être au moins 5 fois plus faible, de préférence au moins 10 fois plus faible, et de préférence au moins 100 fois plus faible que l'épaisseur de la structure métallique à tester.

De préférence, l'épaisseur de la sonde (la pastille) est comprise entre environ 5 µm et environ 100 µm, de préférence entre environ 25µm et environ 100µm.

La présente invention concerne également l'utilisation de ce dispositif pour la détection de la présence et/ou la mesure de la corrosion due principalement à la présence d'oxygène au sein d'une installation comprenant une ou plusieurs structures (principalement) métalliques telle qu'une installation de chauffage, de climatisation, industrielle ou domestique.

Avantageusement, ce dispositif peut être utilisé dans des endroits sensibles au sein de ladite installation, c'est-à-dire des endroits connus pour être susceptibles d'être soumis à certaines conditions défavorables, telles que taux d'oxygénation ou température plus élevée.

### Définitions

Dans la présente invention, le fluide étant présent (ou circulant) dans la structure métallique à contrôler peut être n'importe quel liquide ou gaz.

Ce fluide peut être non corrosif, potentiellement corrosif, ou corrosif.

Dans la présente invention, on entend par « fluide corrosif » un liquide ou un gaz apte à provoquer la « corrosion » d'un objet, en l'occurrence d'une structure métallique, c'est-à-dire l'altération dudit objet par réaction avec le dioxygène.

Si la notion de corrosion au sens le plus large concerne toutes sortes de matériaux tels que les métaux, les céramiques, et les polymères par exemple, dans des environnements variables (milieu aqueux, atmosphère, hautes températures, ...), la présente invention concerne plus particulièrement la corrosion de structures métalliques se présentant sous forme de circuits fermés à l'intérieur desquels circule un fluide corrosif.

La corrosion des métaux est dans la grande majorité des cas une réaction électrochimique (une oxydoréduction) qui fait intervenir la structure métallique et l'environnement *i.e*. le fluide potentiellement corrosif. La corrosion est un phénomène qui dépend non seulement du ou des matériau(x) constituant la structure métallique, mais aussi de la conception de la dite structure (forme, traitement, assemblage) et de la nature de l'environnement *i.e*. de la nature du fluide corrosif.

Dans la présente invention, on entend par « fluide potentiellement corrosif » un liquide ou un gaz qui, dans des conditions standard d'utilisation, n'est *a priori* pas corrosif, mais qui est susceptible de le devenir dans des conditions particulières d'utilisation, prévues ou non.

Dans la présente invention, une « installation » comprend au moins une (une ou plusieurs) structure(s) principalement métallique(s), magnétique(s) ou non magnétique(s), de même nature ou de natures différentes.

On entend par « structure principalement (essentiellement) métallique » une structure constituée en poids d'au moins 50%, de préférence au moins 60%, de préférence au moins 70%, de préférence au moins 80%, de préférence au moins 90% de métal (un ou plusieurs métaux de natures différentes).

On appelle « métal principal » le métal qui est majoritairement représenté en poids au sein de l'installation.

On entend par « structure métallique magnétique » une structure comprenant un ou plusieurs métaux réagissant fortement au magnétisme. Des exemples de métaux magnétiques sont le fer, les aciers ferriques, la fonte, le nickel et le cobalt.

On entend par « structure métallique non magnétique » une structure comprenant un ou plusieurs métaux réagissant faiblement voire pas au magnétisme. Des exemples de métaux non magnétiques sont le cuivre, l'aluminium, le plomb, l'acier inoxydable et austénitique, l'étain, le zinc et le laiton.

Une structure métallique au sens de l'invention se présente sous la forme d'un circuit fermé ou ouvert à l'intérieur duquel est présent (circule) un fluide qui peut être plus ou moins corrosif.

Le dispositif et le procédé selon la présente invention peuvent donc être utilisés aussi bien pour une structure métallique isolée ou qu'une structure intégrée dans une installation.

Le dispositif de détection selon l'invention est utilisable pour la détection et la mesure de tout type de corrosions (forme, taille,...), même s'il est prévu que les moyens de signalisation et/ou d'alarme soient déclenchés uniquement lorsque la corrosion au niveau de la structure métallique testée se situe au-delà d'un certain seuil acceptable, dit « seuil de corrosion ».

### Brève description des figures

Les diverses formes d'exécution seront décrites en détail à l'aide des figures qui suivent dans lesquelles les mêmes références numériques désignent essentiellement les mêmes éléments caractéristiques.

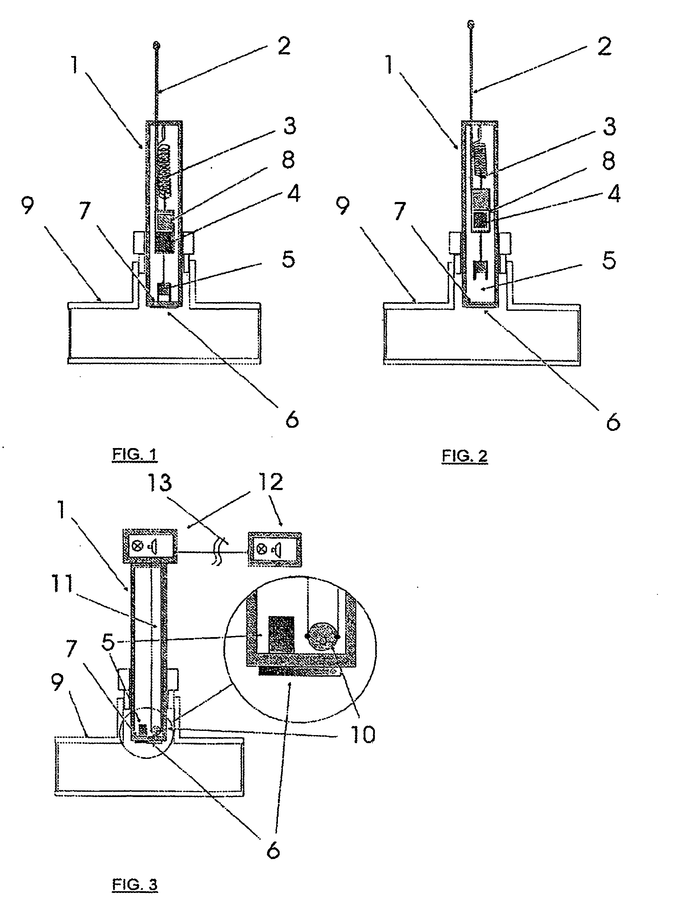

En particulier, les figures 1 et 2 représentent un dispositif selon une première forme d'exécution respectivement en situation de fonctionnement normal et en situation d'alarme. Cette forme d'exécution est adaptée spécifiquement à la détection de la corrosion au niveau de structures métalliques magnétiques.

Les figures 3 et 4 représentent un dispositif selon une seconde forme d'exécution de l'invention respectivement en situation de fonctionnement normal et en situation d'alarme. Cette forme d'exécution est elle aussi adaptée spécifiquement à la détection de la corrosion au niveau de structures métalliques magnétiques.

La figure 5 représente une troisième forme d'exécution de l'invention adaptée quant à elle à la détection de la corrosion au niveau de structures métalliques non magnétiques.

### Description détaillée de l'invention

Selon l'invention, pour pouvoir détecter un certain degré ou seuil de corrosion d'une installation comprenant des structures métalliques, on y place, à au moins un endroit, par exemple au travers d'un accessoire de plomberie 9, une des formes d'exécution du dispositif détecteur, encore appelé dispositif de détection, comme décrit ci-après.

La figure 1 montre une vue en coupe d'une forme d'exécution très simple de l'invention où le détecteur de corrosion comprend un corps principal 1, de préférence en matière synthétique, délimité par une paroi étanche 7 qui définit ainsi l'intérieur et l'extérieur dudit corps principal 1, auxquels correspondent respectivement une face interne et une face externe. On définit aussi pour ledit corps principal 1, une extrémité basale et une extrémité distale.

On doit comprendre que le fluide ne circule pas (n'est pas présent) dans le corps principal 1. Le corps principal 1 est disposé à la périphérie dudit circuit et en est séparé de manière étanche par un élément de nature étanche. Cet élément prend la forme d'une paroi 7 étanche au fluide. La paroi est avantageusement formée d'une matière synthétique, comme un plastique ou une matière polymérique. La paroi est avantageusement non métallique, ce qui permet une détection plus sensible. De préférence, la paroi est réalisée en une matière isolante électriquement.

Le dispositif selon l'invention comprend en outre une sonde, ou échantillon témoin, prenant de préférence la forme d'une pastille de métal 6, de préférence, de faible épaisseur (typiquement de 5 à 100µm, de préférence de 25 à 100µm). Cette pastille 6 est située à proximité du corps principal 1, plus précisément à proximité (de préférence sous) l'extrémité basale du corps principal 1, côté face externe. La sonde ou pastille 6 et la paroi 7 du corps principal 1 sont en contact l'une avec l'autre.

Le métal de la pastille 6 peut être de même nature que le métal principal de l'installation ou qu'un des métaux qui la constitue. Dans cette forme d'exécution, il est indispensable que le métal soit magnétique.

Le dispositif de détection et/ou de mesure de la corrosion selon l'invention comprend aussi un capteur de proximité situé à l'intérieur du corps principal 1 et qui est en contact avec la face interne de la paroi 7.

Ce capteur de proximité comprend lui-même un aimant 5, solidaire d'un indicateur ou voyant lumineux 4 (constitué par exemple d'une partie rouge et d'une partie verte) et d'un ressort 3.

L'aimant 5 situé de l'autre côté de la paroi étanche et isolante 7 du corps principal 1 par rapport à la sonde 6, est, en conditions normales de fonctionnement, maintenu en place par l'attraction magnétique exercée par la pastille métallique 6.

Le ressort 3 du capteur de proximité est taré de telle sorte qu'en dessous d'un certain seuil de corrosion, c'est-à-dire tant que la pastille métallique 6 n'a pas sa masse diminuée de manière sensible par la corrosion, la force d'attraction entre l'aimant 5 et la pastille métallique 6 maintient le ressort 3 en traction, et laisse apparaître de manière visible à l'extérieur de l'installation, la partie verte du voyant 4 au travers d'une fenêtre transparente 8 pratiquée dans la paroi latérale du corps principal 1.

Le seuil de corrosion est de préférence d'au moins 5% en poids, de préférence d'au moins 10%, et de préférence d'au moins, 20%, 30%, 40%, 50%, c'est-à-dire que tant que la pastille métallique 6 n'a pas sa masse diminuée, du fait de la corrosion, d'au moins 5%, de préférence d'au moins 10%, et de préférence d'au moins, 20%, 30%, 40%, 50% par rapport à sa masse initiale, la force d'attraction entre l'aimant 5 et la pastille métallique 6 maintient le ressort 3 en traction, et laisse apparaître de manière visible à l'extérieur de l'installation, la partie verte du voyant 4 au travers d'une fenêtre transparente 8 pratiquée dans la paroi latérale du corps principal 1.

Le seuil de corrosion est variable en fonction du type d'installation à tester et du domaine d'application, selon le degré de tolérance compatible avec le domaine technique.

Cette corrosion peut être profonde ou superficielle (de surface).

Le dispositif de détection et/ou de mesure selon l'invention comprend par ailleurs un levier d'armement ou de réarmement 2 permettant de positionner le capteur de proximité relativement par rapport à la sonde 6. Ce levier 2 permet de placer initialement, depuis l'extérieur, l'aimant 5 en face de la pastille métallique 6 et de mettre le ressort 3 en tension lors de l'installation du dispositif ou d'une maintenance.

La figure 2 montre une vue en coupe de la même forme d'exécution lorsque la pastille 6 est corrodée au dessus d'un certain seuil et n'a plus une masse suffisante pour maintenir, par attraction magnétique, l'aimant 5 contre la paroi 7.

Le ressort 3 ramène le voyant 4 vers le haut et la partie rouge du voyant 4 apparaît alors au travers de la fenêtre transparente 8, qui est ainsi visible de l'extérieur de l'installation.

La figure 3 montre une autre forme d'exécution de l'invention où le dispositif magnétique mécanique de détection de la présence de corrosion du métal constituant le capteur de proximité aimant 5-ressort 3-voyant 4 est remplacé par un autre type de capteur de proximité, en l'occurrence un dispositif électrique.

Dans cette forme particulière d'exécution, la pastille de métal 6, qui dans ce cas doit être magnétique, sert d'entrefer ou de chemin magnétique entre un aimant 5 et un contact magnétique 10 (interrupteur à lames souples (I.L.S.) ou interrupteur REED par exemple) situés tous deux à l'intérieur du corps principal 1, de l'autre côté de la paroi 7 en vis-à-vis par rapport à la pastille 6.

Une liaison électrique 11 relie le contact magnétique 10 à des moyens (par exemple un dispositif) de signalisation et/ou d'alarme 12, qui peuvent être par exemple lumineux et/ou sonore, et sont placés soit localement, soit à distance, via une liaison 13. Cette liaison 13 peut être réalisée suivant n'importe quelle technique connue.

On doit donc comprendre que dans cette forme d'exécution, le capteur de proximité comprend l'aimant 5, le contact magnétique 10, et par extension la liaison 11 et la liaison 13.

Tant que le seuil de corrosion prédéterminé ainsi qu'indiqué ci-dessus n'est pas atteint, c'est-à-dire tant que la masse de la pastille métallique 6 est suffisante, pour assurer un chemin magnétique entre l'aimant 5 et le contact magnétique 10, ce dernier reste actif (fermé ou ouvert suivant le type de contact utilisé) et la liaison électrique 11 transmet l'information au dispositif de signalisation et/ou d'alarme 12.

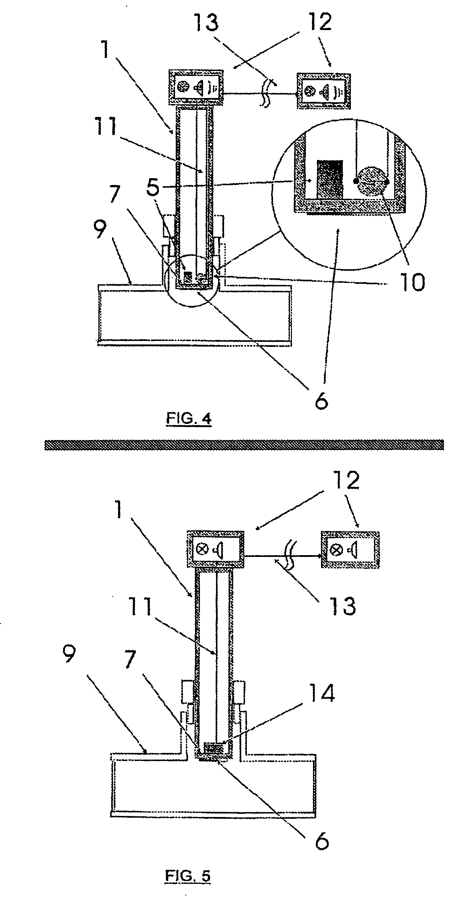

La figure 4 montre la même forme d'exécution, lorsque la masse de la pastille métallique 6 a diminué de manière sensible du fait de la corrosion, c'est-à-dire lorsque le seuil de corrosion de la pastille 6 est atteint. Le chemin magnétique entre l'aimant 5 et le contact magnétique 10 est alors interrompu. Le contact magnétique 10 se désactive (s'ouvre ou se ferme suivant le type de contact utilisé) et communique l'information au dispositif de signalisation et/ou d'alarme 12.

Le contact magnétique 10 peut être remplacé par un capteur de champ à effet Hall, bien connu de l'homme de l'art, lui-même relié au dispositif de signalisation et/ou d'alarme 12 par un circuit électronique adéquat.

Dans cette alternative, le capteur de proximité comprend donc un aimant 5, un capteur de champ à effet Hall, et par extension le circuit électronique adéquat.

La figure 5 montre une forme d'exécution préférée de l'invention où le contact magnétique 10 est remplacé par un capteur ou détecteur de proximité électronique.

Dans cette forme particulière d'exécution, la pastille de métal 6 peut être de n'importe quelle nature : magnétique ou non-magnétique.

Le capteur ou détecteur de proximité (de métaux) est de type inductif et est constitué d'un inducteur (bobine) 14 relié à un circuit électronique adapté et au dispositif de signalisation et/ou d'alarme 12, qui peut être par exemple lumineux et/ou sonore, par une liaison électrique 11.

Ce dispositif est placé localement ou à distance via une liaison 13. Cette liaison 13 peut être réalisée suivant n'importe quelle technique connue.

La pastille 6 agit alors comme un noyau pour cette bobine 14.

Comme dans les formes d'exécution précédemment présentées, tant que le seuil de corrosion prédéterminé ainsi qu'indiqué ci-dessus n'est pas atteint, c'est-à-dire que tant que la masse de la pastille métallique 6 est suffisante pour être considérée par le capteur de proximité 14 comme un objet métallique, le capteur transmet l'information au dispositif de signalisation et/ou alarme 12.

Lorsque la masse de la pastille métallique 6 a diminué de manière sensible du fait de la corrosion, le capteur de proximité 14 ne détecte plus d'objet métallique et communique l'information au dispositif de signalisation et/ou d'alarme 12.

Dans cette forme d'exécution, le capteur de proximité du dispositif de détection comprend donc l'aimant 5, la bobine 14 et par extension le circuit électronique adéquat.

Le capteur de proximité inductif 14 peut être remplacé par un capteur de proximité, de type optique ou capacitif ou autre, ayant les mêmes fonctions.

On peut ainsi envisager d'utiliser un capteur de proximité optique pour la détection de corrosions localisées telles que des piqûres.

Les circuits électroniques d'interprétation des signaux du capteur sont adaptés pour signaler l'absence de métal plutôt que la présence de métal comme on le ferait pour un détecteur de métaux.

Pour raison d'économie d'énergie, le capteur de proximité 10, 14 est avantageusement adapté pour mesurer à des moments discrets dans le temps. De préférence, la période de temps entre deux mesures successives du capteur de proximité est d'au moins 12 heures, de préférence au moins 24 heures, au moins 48 heures ou au moins 100 heures.

Pour la même raison, les moyens de signalisation 12 sont avantageusement adaptés pour transmettre un signal à des moments discrets dans le temps. De préférence, la période de temps entre deux transmissions successives du dispositif de signalisation est d'au moins 12 heures, de préférence au moins 24 heures, au moins 48 heures ou au moins 100 heures.

## Revendications

1. Dispositif de détection de la présence et/ou de mesure de la corrosion au niveau d'au moins une structure principalement métallique à l'intérieur de laquelle est présent un fluide, ledit dispositif comprenant:
- un corps principal (1), comprenant une paroi (7) étanche au fluide qui sépare une face interne au corps principal d'une face externe,
- une sonde (6) prenant la forme d'une pastille métallique (6) de même nature métallique que la structure métallique, située du côté de ladite face externe et destinée à être immergée dans le fluide et à être corrodée et par conséquent à perdre au moins une partie de sa masse,
- un capteur de proximité (5, 3, 4 ; 5, 10 ; 5, 14) situé du côté de ladite face interne au corps principal (1) et séparé de ladite sonde (6) par la paroi (7), ledit capteur de proximité étant conçu pour interagir avec la pastille (6) métallique tant que la masse de celle-ci ne diminue pas en dessous d'une quantité critique correspondant à un seuil de corrosion prédéterminé.

2. Dispositif selon la revendication 1, **caractérisé en ce que** la pastille métallique (6) est en contact avec la paroi (7).

3. Dispositif selon la revendication 1 ou 2, comprenant des moyens (12) de signalisation et/ou d'alarme, le capteur de proximité étant conçu pour activer les moyens de signalisation et/ou d'alarme (12) en l'absence d'interaction capteur de proximité/sonde.

4. Dispositif selon l'une quelconque des revendications précédentes, comprenant des moyens pour transmettre l'état de l'interaction capteur de proximité/sonde à l'extérieur du dispositif, la période de temps entre deux transmissions successives étant d'au moins 12 heures, de préférence au moins 24 heures, au moins 48 heures et de préférence au moins 100 heures.

5. Dispositif selon l'une quelconque des revendications précédentes, **caractérisé en ce que** le seuil de corrosion correspond à une variation en masse de la pastille métallique (6) d'au moins 5%, de préférence d'au moins 10%, et de préférence d'au moins, 20%, 30%, 40%, 50%.

6. Dispositif selon l'une quelconque des revendications précédentes, **caractérisé en ce que** la paroi (7) est non métallique et de préférence non magnétique.

7. Dispositif selon l'une quelconque des revendications précédentes, **caractérisé en ce que** la pastille métallique (6) est magnétique.

8. Dispositif selon la revendication 7, **caractérisé en ce que** ledit capteur de proximité est de type mécanique et comprend au moins un aimant (5) relié à un ressort (3) lui-même raccordé à un indicateur (4).

9. Dispositif selon la revendication 8, **caractérisé en ce que** le ressort (3) est taré pour présenter une force de rappel inférieure à la force exercée par l'aimant (5) agissant sur la pastille métallique (6) tant que la masse de ladite pastille métallique (6) ne diminue pas en dessous de la quantité critique.

10. Dispositif selon l'une quelconque des revendications 1 à 7, **caractérisé en ce que** le capteur de proximité est de type magnétique et comprend un aimant (5), un contact magnétique (10) ou un capteur de champ à effet Hall, la pastille métallique (6) constituant un entrefer ou un chemin magnétique entre l'aimant (5) et le contact magnétique (10) ou le capteur de champ à effet Hall.

11. Dispositif selon l'une quelconque des revendications 1 à 6, **caractérisé en ce que** le capteur de proximité est de type inductif.

12. Dispositif selon la revendication 11, **caractérisé en ce que** le capteur de proximité comprend une bobine inductrice (14).

13. Dispositif selon l'une quelconque des revendications précédentes, **caractérisé en ce que** l'épaisseur de la pastille métallique (6) est comprise entre environ 5µm et environ 100µm.

14. Dispositif selon l'une quelconque des revendications précédentes, **caractérisé en ce que** la paroi (7) comprend au moins un composant sélectionné parmi le groupe constitué par les céramiques, et les polymères non conducteurs.

15. Utilisation du dispositif selon l'une quelconque des revendications précédentes pour la détection de la présence et/ou la mesure de la corrosion au sein d'une installation comprenant une ou plusieurs structures métalliques telle qu'une installation de chauffage, de climatisation industrielle ou domestique.

## Claims

1. Device for detecting the presence of corrosion and/or measuring corrosion on at least one mainly metallic structure inside which a fluid is present, said device comprising:
- a main body (1), comprising a fluid-tight wall (7) which separates a face internal to the main body from an external face,
- a probe (6) taking the form of a metallic flake (6) of the same metallic nature as the metallic structure, located on the side of said external face and arranged to be immersed in the fluid and to be corroded and thus to lose at least a part of its mass,
- a proximity sensor (5, 3, 4; 5, 10; 5, 14) located on the side of said internal face of the main body (1) and separated from said probe (6) by the wall (7), said proximity sensor being arranged to interact with the metallic flake (6) as long as the mass of the latter does not drop below a critical quantity corresponding to a predetermined corrosion threshold.

2. Device according to claim 1, **characterised in that** the metallic flake (6) is in contact with the wall (7).

3. Device according to claim 1 or 2, comprising signalling and/or alarm means (12), the proximity sensor being arranged to activate the signalling and/or alarm means (12) in the absence of proximity sensor/probe interaction.

4. Device according to any one of the preceding claims, comprising means for transmitting the state of proximity sensor/probe interaction to outside the device, the period of time between two successive transmissions being at least 12 hours, preferably at least 24 hours, at least 48 hours and preferably at least 100 hours.

5. Device according to any one of the preceding claims, **characterised in that** the corrosion threshold corresponds to a change in mass of the metallic flake (6) of at least 5%, preferably at least 10%, and preferably at least 20%, 30%, 40%, 50%.

6. Device according to any one of the preceding claims, **characterised in that** the wall (7) is non-metallic and preferably non-magnetic.

7. Device according to any one of the preceding claims, **characterised in that** the metallic flake (6) is magnetic.

8. Device according to claim 7, **characterised in that** said proximity sensor is of the mechanical type and comprises at least one magnet (5) connected to a spring (3) which is itself coupled to an indicator (4).

9. Device according to claim 8, **characterised in that** the spring (3) is calibrated so as to have a restoring force that is smaller than the force exerted by the magnet (5) acting on the metallic flake (6) as long as the mass of said metallic flake (6) does not drop below the critical quantity.

10. Device according to any one of claims 1 to 7, **characterised in that** the proximity sensor is of the magnetic type and comprises a magnet (5), a magnetic contact (10) or a Hall-effect field sensor, the metallic flake (6) constituting a gap or a magnetic path between the magnet (5) and the magnetic contact (10) or the Hall-effect field sensor.

11. Device according to any one of claims 1 to 6, **characterised in that** the proximity sensor is of the inductive type.

12. Device according to claim 11, **characterised in that** the proximity sensor comprises an inductive coil (14).

13. Device according to any one of the preceding claims, **characterised in that** the thickness of the metallic flake (6) is comprised between approximately 5 µm and approximately 100 µm.

14. Device according to any one of the preceding claims, **characterised in that** the wall (7) comprises at least one component selected from the group consisting of ceramics and non-conductive polymers.

15. Use of the device according to any one of the preceding claims for detecting the presence of corrosion and/or measuring corrosion within an installation comprising one or more metallic structures, such as a heating installation or an industrial or domestic air-conditioning installation.

## Patentansprüche

1. Vorrichtung zum Erfassen des Vorliegens von Korrosion und/oder Messen der Korrosion auf dem Niveau mindestens einer im Wesentlichen metallischen Struktur, in deren Innerem ein Fluid vorhanden ist, wobei die Vorrichtung Folgendes aufweist:
- einen Hauptkörper (1), der eine für das Fluid dichte Wand (7) aufweist, die eine Innenfläche des Hauptkörpers von einer Außenfläche trennt,
- eine Sonde (6), die die Form einer Metallpastille (6) mit gleicher metallischer Beschaffenheit wie die Metallstruktur aufweist, die sich auf der Seite der Außenfläche befindet und dazu bestimmt ist, in das Fluid eingetaucht und korrodiert zu werden und daher mindestens einen Teil ihrer Masse zu verlieren,
- einen Näherungssensor (5, 3, 4; 5, 10; 5, 14), der sich auf der Seite der Innenfläche des Hauptkörpers (1) befindet und von der Sonde (6) durch die Wand (7) getrennt ist, wobei der Näherungssensor konzipiert ist, um mit der Metallpastille (6) so lange in Wechselwirkung zu treten, wie diese nicht unter eine kritische Menge fällt, die einem vorbestimmten Korrosionsschwellenwert entspricht.

2. Vorrichtung nach Anspruch 1, **dadurch gekennzeichnet, dass** die Metallpastille (6) mit der Wand (7) in Berührung ist.

3. Vorrichtung nach Anspruch 1 oder 2, die Melde-und/oder Alarmmittel (12) aufweist, wobei der Näherungssensor ausgelegt ist, um die Melde- und/oder Alarmmittel (12) bei Fehlen einer Wechselwirkung zwischen Näherungssensor und Sonde zu aktivieren.

4. Vorrichtung nach einem der vorhergehenden Ansprüche, die Mittel zum aus der Vorrichtung heraus Übertragen des Zustands der Wechselwirkung zwischen Näherungssensor und Sonde aufweist, wobei die Zeitperiode zwischen zwei aufeinander folgenden Übertragungen mindestens 12 Stunden beträgt, vorzugsweise mindestens 24 Stunden, mindestens 48 Stunden und vorzugsweise mindestens 100 Stunden.

5. Vorrichtung nach einem der vorhergehenden Ansprüche, **dadurch gekennzeichnet, dass** der Korrosionsschwellenwert einer Massevariation der Metallpastille (6) von mindestens 5 %, vorzugsweise mindestens 10 % und vorzugsweise mindestens 20 %, 30 %, 40 %, 50 % entspricht.

6. Vorrichtung nach einem der vorhergehenden Ansprüche, **dadurch gekennzeichnet, dass** die Wand (7) nicht metallisch und vorzugsweise nicht magnetisch ist.

7. Vorrichtung nach einem der vorhergehenden Ansprüche, **dadurch gekennzeichnet, dass** die Metallpastille (6) magnetisch ist.

8. Vorrichtung nach Anspruch 7, **dadurch gekennzeichnet, dass** der Näherungssensor mechanischer Art ist und mindestens einen Magnet (5) aufweist, der mit einer Feder (3) verbunden ist, die selbst an einen Anzeiger (4) angeschlossen ist.

9. Vorrichtung nach Anspruch 8, **dadurch gekennzeichnet, dass** die Feder (3) tariert ist, um eine Rückholkraft aufzuweisen, die kleiner ist als die Kraft, die von dem Magnet (5) ausgeübt wird, der auf die Metallpastille (6) einwirkt, solange die Masse der Metallpastille (6) nicht unter die kritische Menge fällt.

10. Vorrichtung nach einem der Ansprüche 1 bis 7, **dadurch gekennzeichnet, dass** der Näherungssensor magnetischer Art ist und einen Magnet (5), einen magnetischen Kontakt (10) oder einen Feldsensor mit Hall-Effekt aufweist, wobei die Metallpastille (6) eine Luftspalte oder einen magnetischen Pfad zwischen dem Magnet (5) und dem magnetischen Kontakt (10) oder dem Feldsensor mit Hall-Effekt bildet.

11. Vorrichtung nach einem der Ansprüche 1 bis 6, **dadurch gekennzeichnet, dass** der Näherungssensor induktiver Art ist.

12. Vorrichtung nach Anspruch 11, **dadurch gekennzeichnet, dass** der Näherungssensor eine Feldspule (14) aufweist.

13. Vorrichtung nach einem der vorhergehenden Ansprüche, **dadurch gekennzeichnet, dass** die Dicke der Metallpastille (6) zwischen etwa 5 µm und etwa 100 µm liegt.

14. Vorrichtung nach einem der vorhergehenden Ansprüche, **dadurch gekennzeichnet, dass** die Wand (7) mindestens einen Bauteil aufweist, der aus der Gruppe ausgewählt wird, die aus Keramiken und nicht leitenden Polymeren besteht.

15. Einsatz der Vorrichtung nach einem der vorhergehenden Ansprüche zum Erfassen des Vorliegens und/oder zum Messen der Korrosion innerhalb einer Anlage, die eine oder mehrere Metallstrukturen, wie zum Beispiel eine Heizanlage, industrielle oder Haushaltsklimatisierungsanlage aufweist.
